# EUROPÄISCHE PATENTSCHRIFT

(11) **EP 3 393 272 B1**
(45) Veröffentlichungstag und Bekanntmachung des Hinweises auf die Patenterteilung: **09.10.2024**
(21) Anmeldenummer: 16722042.5
(22) Anmeldetag: 08.04.2016
(51) Int. Cl.: A23L 2/52, C12G 3/00, F25C 5/00, A23G 9/04, A23G 9/52

(54) **VERFAHREN ZUM HERSTELLEN EINES GETRÄNKS IN EINEM GETRÄNKEBEHÄLTER**
METHOD FOR PRODUCING A BEVERAGE IN A BEVERAGE CONTAINER
PROCÉDÉ POUR PRÉPARER UNE BOISSON DANS UN CONTENANT À BOISSON

(30) Priorität: 22.12.2015 DE 102015122610
(43) Veröffentlichungstag der Anmeldung: 31.10.2018
(73) Patentinhaber: Kukki GmbH, 14167 Berlin (DE)
(72) Erfinder: KLEMM, Josef, 14165 Berlin (DE); HAMED, Saif, 10247 Berlin (DE)
(74) Vertreter: Bittner, Thomas L.
(86) Internationale Anmeldenummer: PCT/DE2016/100165
(87) Internationale Veröffentlichungsnummer: WO 2017/108020

(56) Entgegenhaltungen:
- WO-A1-03/078907
- US-A1- 2001 007 345
- US-A1- 2009 226 574
- US-A1- 2009 226 574
- US-A1- 2014 335 242
- US-A1- 2014 335 242
- LARUE GIDGET: "Cocktails for a Crowd? Try Sangria! (sangria recipe white)", 16 July 2015 (2015-07-16), XP055291684, Retrieved from the Internet <URL:http://www.coupons.com/thegoodstuff/sangria-recipe-white/> [retrieved on 20160727]
- LARUE GIDGET: "Cocktails for a Crowd? Try Sangria! (sangria recipe white)", 16 July 2015 (2015-07-16), XP055291684, Retrieved from the Internet <URL:http://www.coupons.com/thegoodstuff/sangria-recipe-white/> [retrieved on 20160727]

## Beschreibung

Die Erfindung betrifft Verfahren zum Herstellen eines Getränks in einem Getränkebehälter.

### Hintergrund

Bisher werden Getränke lediglich flüssig abgefüllt und gegebenenfalls durch externe Kühlung im Ganzen durchgefroren. Die Zugabe von Eiswürfeln erfolgt nicht während der Abfüllung in das Transportgefäß, sondern erst später, wenn das Getränk in ein Serviergefäß umgefüllt wird.

Am Ort des Servierens bzw. des Verzehrs steht häufig aufgrund Platzproblemen (Zug-Restaurants) oder mangelnder elektrischer Versorgung (Strandbars) keine Möglichkeit zur Verfügung, Kühlvorrichtungen zu betreiben, um die Eiswürfel darin vorzuhalten.

Häufig wird ein Getränk dann an derartigen Orten einfach ohne Eiswürfel verzehrt, was Genuss und Geschmack jedoch negativ beeinflusst. Zu Cocktails gehört insbesondere Eis.

Gemäß US 2009/0226574 A1 wird ein mikrowellengeeigneter Behälter für ein gefrorenes Getränk bereitgestellt, welcher mit einem Foliendeckel versiegelt ist. Der Deckel des im Wesentlichen rechteckigen Behälters weist verschiedene Öffnungen zum Ausgießen des Getränks nach dem Auftauen in der Mikrowelle auf. Der Gefrierpunkt des Getränks liegt unterhalb dem von Eis, damit die in dem gefrorenen Getränk enthaltenen Eiswürfel nach dem Auftauen des Getränks erhalten bleiben.

Ein selbstgemachter Cocktail, welcher zum Ausschenken auf einer Party in einem großen Gefäß mit dekorativen kugelförmigen Eiswürfeln mit Zitrusfrüchten gekühlt wird, wird beschrieben von Gidget+Larue ("Cocktails for a Crowd? Try Sangria! (sangria recipe white)).

US 2014/0335242 A1 offenbart eine automatische Cocktail-Maschine, mit welcher nach dem zuvor erfolgten Befüllen der Maschine mit Zutaten ein Cocktail gemischt und in ein Glas ausgegeben werden kann. Ein Modul zur Eisherstellung ist vorgesehen, so dass zusammen mit dem Cocktail auch Eiswürfel in das Glas gegeben werden können.

Das Dokument US 2001/007345 A1 betrifft einen Gegenstand zum Bilden einer gefrierfähigen Substanz mit einem Körper mit mindestens einem Hohlraum. Der Hohlraum hat eine offene Oberseite, einen offenen Boden und dazwischenliegende Seitenwände. Die Breite der Oberseite wird so gewählt, dass aus dem Hohlraum ein langer, zylindrischer Eiswürfel entsteht. Der so entstandene Eiswürfel passt in Getränkedosen oder Flaschen, sodass die Getränke gekühlt werden.

Im Dokument WO 03/078907 A1 ist ein Gegenstand zum Bilden einer gefrierbaren Substanz mit einem Körper mit mindestens einem Hohlraum offenbart. Der Hohlraum weist eine offene Oberseite, einen offenen Boden und dazwischenliegende Seitenwände auf. Die Breite ist so gewählt, dass durch den Hohlraum ein langer, zylindrischer Eiswürfel gebildet wird. Der so gebildete Eiswürfel passt in Original-Getränkebehälter. Der Gegenstand kann auch eine individuelle Einwegverpackung zum Aufbewahren der gefrorenen Substanz und einen Behälter beinhalten. Die Verpackung besteht aus einem unteren Abschnitt und einem oberen Abschnitt. Die gefrorene Substanz wird in den unteren Abschnitt und der obere Abschnitt über den unteren Abschnitt gelegt, um die Verpackung abzudichten und ein Verschütten der gefrierfähigen Substanz vor dem Einfrieren zu verhindern.

### Zusammenfassung

Aufgabe der Erfindung ist es, neue Technologien anzugeben, welche erweiterte Darreichungsformen für alkoholhaltige und nichtalkoholhaltige Getränke ermöglichen. Insbesondere sollen Verfahren zum Herstellen eines Getränks in einem Getränkebehälter geschaffen werden.

Die Aufgabe wird gelöst durch Verfahren nach den Ansprüchen 1, 8 und 9.Ausgestaltungen sind Gegenstand von abhängigen Ansprüchen.

Nach einem Aspekt ist ein Verfahren zum Herstellen eines Getränks in einem Getränkebehälter nach Anspruch 1 geschaffen.

Nach einem weiteren Aspekt ist ein Verfahren zum Herstellen eines Getränks in einem Getränkebehälter nach Anspruch 8 geschaffen. Nach einem weiteren Aspekt ist ein Verfahren zum Herstellen eines Getränks in einem Getränkebehälter nach Anspruch 9 geschaffen.

In einem Beispiel, das nicht Teil der beanspruchten Erfindung ist, kann ein Getränkeartikel mit einem Getränk geschaffen sein. Der Getränkeartikel kann einen Getränkebehälter aufweisen, welcher mit einer Getränkeflüssigkeit befüllt ist. In dem Getränkebehälter ist weiterhin ein Kühlmittel eingebracht, welches mehrere Wassereisformlinge aufweist und in der Getränkeflüssigkeit aufgenommen ist. Eine Behälteröffnung des Getränkebehälters ist mit einem Einwegverschluss verschlossen ist, durch die hindurch das Kühlmittel mit den mehreren Wassereisformlingen und die Getränkeflüssigkeit in dem Getränkebehälter eingebracht sind.

Der Getränkebehälter weist einen sich zur Behälteröffnung hin verjüngenden Behälterabschnitt auf, und das Kühlmittel mit den mehreren Wassereisformlingen und die Getränkeflüssigkeit werden nach dem Passieren der Behälteröffnung durch den sich verjüngenden Behälterabschnitt eingebracht. Es kann sich um eine Getränkeflasche handeln, bei der der sich verjüngende Abschnitt mit einem Flaschenhals gebildet ist. Die mehreren Wassereisformlinge sind in einer räumlichen Dimension größer als ein Durchmesser der Behälteröffnung.

Der Einwegverschluss kann nach dem Öffnen wiederverschließbar sein. Alternativ kann eine Ausführung des Einwegverschlusses vorgesehen sein, bei der ein Wiederverschließen nicht ermöglicht ist, beispielweise aufgrund einer Zerstörung des Einwegverschlusses beim erstmaligen Öffnen. Die Bezeichnung Einwegverschluss in der hier verwendeten Bedeutung umfasst auch Verschlüsse, die mehrfach wiederverschließbar sind, wobei beim erstmaligen Öffnen nach einem Befüllvorgang ein Frische- oder Verschlusssiegel zerstört werden kann. Beispielsweise kann es sich um einen Bügel-, Schraub- oder Steckverschluss handeln, welcher nach dem Befüllen des Getränkebehälters mit einem Siegel versehen wird, welches beim erstmaligen Öffnen aufreißt und so zerstört wird, zum Beispiel ein Papiersiegel.

Der Getränkebehälter kann ein Einweg- oder ein Mehrwegbehälter sein, zum Beispiel eine Einweg- oder eine Mehrwegflasche.

Das Kühlmittel mit den mehreren Wassereisformlingen, die auch verkürzt als Eisformlinge bezeichnet werden können, wird vor dem Befüllen des Getränkebehälters mit der Getränkeflüssigkeit eingebracht.

Der befüllte Getränkebehälter kann bei einer Kühltemperatur gelagert werden, die höher ist als der Gefrierpunkt der Getränkeflüssigkeit. Aber auch ein teilweises Gefrieren der Getränkeflüssigkeit, wahlweise bis hin zum Durchfrieren, kann vorgesehen sein im Rahmen der gekühlten Lagerung.

Die Behälteröffnung kann mit einem Einwegverschluss aus der folgenden Gruppe verschlossen wird: Kronenkorken, Korken, Schraubverschluss, Twist-Off Verschluss, Bügelverschluss, Heißsiegel-Verschlüsse.

Es können eine alkoholhaltige Getränkeflüssigkeit, die anteilig Ethanol enthält, und / oder eine nichtalkoholhaltige Getränkeflüssigkeit eingefüllt werden, die anteilig Glycerin enthält.

Der Getränkebehälter wird vor dem Einbringen des Kühlmittels und vor dem Befüllen mit der Getränkeflüssigkeit auf eine Temperatur zwischen dem Gefrierpunkt der Getränkeflüssigkeit und 0 °C gekühlt.

Beim Einbringen des Kühlmittels mit dem wenigstens einen Wassereisformling kann zusätzlich eine Menge flüssiges Wasser in den Getränkebehälter eingefüllt werden, die den einen Gefäßboden des Getränkebehälters bedeckt.

Der befüllte Getränkebehälter kann beim gekühlten Lagern auf eine Kühltemperatur gekühlt werden, die kleiner ist als eine Schmelztemperatur der Getränkeflüssigkeit.

Der wenigstens eine Wassereisformling kann über eine Führungseinrichtung der Behälteröffnung zugeführt werden, wobei die Führungseinrichtung mittels einer Positioniereinrichtung relativ zur Behälteröffnung positioniert wird. Die Positioniereinrichtung kann hierbei in direkten Kontakt mit dem Getränkebehälter gebracht werden, sich zum Beispiel hierauf abstützen, beispielweise im Bereich der Behälteröffnung und / oder dem verjüngten Behälteranschnitt. Die Positioniereinrichtung kann die Behälteröffnung teilweise oder ganz umgreifen. Die Führungseinrichtung für die Eisformlinge weist einen endseitigen Ausgang, welcher mittels der Positioniereinrichtung zur Behälteröffnung ausgerichtet wird. Die Vorrichtung zum Einführen mit der Führungseinrichtung und der Positioniereinrichtung kann bei dem hier beschriebene Verfahren oder alternativ auch bei anderen Verfahren verwendet werden, welche das Einführen eines Eisformlings vorsehen.

Nachfolgend werden weitere alternative Ausgestaltungen erläutert.

Beim Befüllen des Getränkebehälters kann Folgendes vorgesehen sein. Es kann zunächst zumindest ein Wassereisformling in den Getränkebehälter gegeben werden, danach wird flüssige Getränkeflüssigkeit mit einem Gefrierpunkt G kleiner als 0°C in den Getränkebehälter gegeben, um den Getränkebehälter sodann zu verschließen mit dem Einwegverschluss, und danach wird das Getränk bei einer Temperatur T mit G<T≤0°C gekühlt gelagert. Alternativ wird zunächst die flüssige Getränkeflüssigkeit mit einem Gefrierpunkt G kleiner als 0 Grad Celsius in den Getränkebehälter gegeben, danach wird zumindest ein Wassereisformling in den Getränkebehälter gegeben, und nach dem Verschließen des Getränkebehälters wird das Getränk bei einer Temperatur T mit G<T≤0°C gekühlt gelagert.

Bei dem Getränkebehälter oder dem Gefäß handelt es sich um ein Gefäß, welches zur Lagerung und den Transport von Getränken gekühlt unter 0°C geeignet ist.

Bei den Eisformlingen kann es sich um gefrorenes Wasser handeln, also Wassereis, welches beim Herstellen in eine Form gebracht wurde. Die Form kann beliebig sein. Sie ist jedoch so beschaffen, dass die Eisformlinge durch die Öffnung des Getränkebehälters eingebracht werden können. Die Eisformlinge können beispielsweise die Form von länglichen Zylindern oder Zapfen oder von Würfeln haben.

Bei der Getränkeflüssigkeit handelt es sich beispielweise um eine alkoholhaltige oder nichtalkoholhaltige trinkbare Flüssigkeit auf Wasserbasis, beispielsweise eine Cocktailmischung mit verschiedenen Säften und / oder alkoholischen Substanzen. Die alkoholischen Substanzen bewirken eine Absenkung des Schmelzpunktes (Gefrierpunktes der Getränkeflüssigkeit) auf unter 0°C. Im Fall des nichtalkoholhaltigen Getränks enthält dieses ein Frostschutzmittel, zum Beispiel Glycerin. Über die Reihenfolge beim Abfüllvorgang lässt sich beeinflussen, ob die Eiswürfel später im fertig befüllten Getränkebehälter innerhalb der Getränkeflüssigkeit lose schwimmen oder ob sie festgefroren-haltend am Boden fixiert sind.

Alkohol kann in der Getränkeflüssigkeit zumindest teilweise durch Ethanol und / oder Glycerin gebildet sein. Umgangssprachlich wird häufig zwischen Cocktails mit und ohne Alkohol unterschieden. In den Cocktails "mit Alkohol" ist in der Regel Ethanol enthalten, welches eine berauschende Wirkung auf den Menschen hat. Cocktails "ohne Alkohol" enthalten in der Regel kein Ethanol. Im chemischen Verständnis hingegen sind sowohl Ethanol als auch Glycerin Alkohole. Soll nun ein umgangssprachlich "Cocktail mit Alkohol" im Gefäß abgefüllt werden, kann vorgesehen sein, lediglich Ethanol zur Getränkeflüssigkeit zuzugeben. Soll hingegen ein umgangssprachlich "Cocktail ohne Alkohol" in den Getränkebehälter abgefüllt werden, so kann Glycerin zugefügt werden, welches keine berauschende Wirkung auf den Menschen hat. Glycerin findet sich in vielen Lebensmitteln und ist unbedenklich. Somit können mit dem beschriebenen Verfahren Getränke, zum Beispiel Cocktails, mit und ohne Alkohol und einen oder mehrere Eisformlinge enthaltend hergestellt werden.

Wenn zunächst zumindest ein Eisformling und danach Getränkeflüssigkeit mit einer Temperatur ≤ 0°C in den Getränkebehälter gegeben werden, können die Eisformlinge am Boden des Gefäßes haften und schwimmen nicht auf, wenn die Getränkeflüssigkeit zugegeben wird. Bei Zugabe des Eisformlings in den Getränkebehälter fällt dieser auf den Boden des Gefäßes und berührt diesen. Der Boden des Getränkebehälters hat in der Regel eine höhere Temperatur als 0°C, beispielsweise Raumtemperatur, und schmilzt deshalb den Eisformling äußerlich etwas an. Der Eisformling hat eine Schmelztemperatur von etwa 0°C. Bei dem oberflächlichen Anschmelzen entsteht zwischen Eisformling und wärmerem Boden ein Wasserfilm. Danach erst wird flüssige Getränkeflüssigkeit mit einer Temperatur < 0°C in den Getränkebehälter gegeben. Die Getränkeflüssigkeit auf Wasserbasis ist trotz ihrer kälteren Temperatur als 0°C flüssig, weil der Alkoholgehalt den Gefrierpunkt der Getränkeflüssigkeit absenkt. Der Gefrierpunkt beträgt beispielsweise -7°C. Die kalte Flüssigkeit bringt den zuvor entstandenen Wasserfilm zwischen Eisformling und Gefäßboden sowie die Oberfläche des angeschmolzenen Eisformlings selbst wieder zum Gefrieren. Hierbei geht der Eisformling eine Verbindung mit dem Gefäßboden ein, so dass dieser daran haftet. Nachfolgend können der Getränkebehälter und somit das abgefüllte Getränk bei einer Temperatur zwischen dem Gefrierpunkt der Getränkeflüssigkeit und dem Gefrierpunkt des Eisformlings gehalten werden, also beispielsweise bei einer Temperatur zwischen 0 und -7°C. Die Getränkeflüssigkeit bleibt flüssig und trinkfertig; der Eisformling bleibt gefroren und fest am Gefäßboden haften.

Wenn hingegen gemäß einem Beispiel, welches nicht Teil der beanspruchten Erfindung ist, zunächst Getränkeflüssigkeit mit einer Temperatur ≤ 0°C in den Getränkebehälter gegeben wird, und danach zumindest ein Eisformling in dem Getränkebehälter eingeführt wird, kleben die Eisformlinge nicht aneinander und auch nicht am Gefäßboden fest, sondern schwimmen frei in der Getränkeflüssigkeit. Die in den Getränkebehälter gegebene Getränkeflüssigkeit kann auch hier eine Temperatur von unter 0°C über ihrem eigenen Gefrierpunkt aufweisen. Die Wassereisformlinge werden dann in eine Flüssigkeit gegeben, die kälter ist als ihr eigener Gefrierpunkt. Die Oberfläche der Eisformlinge wird nicht angeschmolzen. Der Eisformling bleibt komplett gefroren, und es kann sich an seiner Oberfläche auch kein Wasserfilm bilden. Im Ergebnis hat der Eisformling keine Möglichkeit, sich direkt oder mittelbar über einen Wasserfilm mit einem anderen Eisformling oder mit der Wand bzw. dem Boden des Getränkebehälters zu verbinden. Jeder zugegebene Eisformling kann innerhalb der Getränkeflüssigkeit für sich separiert bleiben und schwimmt darin frei. Auch bei dieser alternativen Ausgestaltung ist der Gefrierpunktunterschied von Bedeutung, um Anhaftungen wirksam zu vermeiden. Nach dem Schließen des Getränkebehälters können der Getränkebehälter und somit das abgefüllte Getränk bei einer Temperatur zwischen dem Gefrierpunkt der Getränkeflüssigkeit und dem Gefrierpunkt des Eisformlings gehalten werden. Die Getränkeflüssigkeit bleibt dann flüssig und trinkfertig. Die Eisformlinge bleiben daher fest im gefrorenen Zustand.

Es ist gemäß einem Beispiel, welches nicht Teil der beanspruchten Erfindung ist, auch möglich, die flüssige Getränkeflüssigkeit mit einer Temperatur von über 0°C, dem Gefrierpunkt des Wassereises, einzufüllen. Wenn beispielsweise bis zur Abkühlung der flüssigen Getränkeflüssigkeit auf kleiner oder gleich 0°C bis zu 30% der Eiswürfel abschmelzen, so ist das noch vertretbar. Diese in Wasser umgewandelte Flüssigkeit verdünnt dann die flüssige Getränkeflüssigkeit, welche zuvor aber entsprechend höher konzentriert abgefüllt werden kann.

Der leere Getränkebehälter wird vor Befüllung zunächst auf eine Temperatur T zwischen dem Gefrierpunkt G der Getränkeflüssigkeit und 0°C gekühlt. Wenn zuerst die Getränkeflüssigkeit in den Getränkebehälter gegeben wird, kann diese sich nicht zunächst möglicherweise durch die Gefäßwand auf über 0°C erwärmen, was beim Zugabezeitpunkt des Eisformlings zu vermeiden ist, damit dieser nicht anschmilzt. Die Getränkeflüssigkeit muss bei Zugabe des Eisformlings eine Temperatur unter oder gleich 0°C haben. Dies kann unterstützend eben dadurch verhindert werden, dass das leere Gefäß vor Befüllung mit der Getränkeflüssigkeit zunächst auf eine Temperatur T zwischen dem Gefrierpunkt G der Getränkeflüssigkeit und 0°C gekühlt wird, also mit anderen Worten unterhalb des Gefrierpunktes von Wasser.

Der Getränkebehälter kann gemäß einem Beispiel, welches nicht Teil der beanspruchten Erfindung ist, auch kälter als Gefrierpunkt G gekühlt werden. Dann friert die Getränkeflüssigkeit ebenfalls an der Gefäßwandung fest. Es kann maximal so viel Flüssigkeit anfrieren wie die Flasche durch ihre spezifische Wärmekapazität an Energie der Getränkeflüssigkeit entziehen kann. Wenn hingegen zuerst der Eisformling in den Getränkebehälter gegeben wird, dann fällt dieser auf einen Gefäßboden, welcher kälter ist als 0°C.

Bei Zugabe der Eisformlinge wird eine Menge flüssiges Wasser mit einer Temperatur T > 0°C zugegeben, die den Boden des Getränkebehälters bedeckt. In Verbindung mit einem unter dem Gefrierpunkt des Eisformlings abgekühlten Gefäßbodens auf unter 0°C ergibt sich eine schnelle zuverlässige Verbindungsmöglichkeit des Eisformlings mit dem Boden des Getränkebehälters. Der kalte Gefäßboden lässt das zugegebene Wasser darauf gefrieren und friert und die zugegebenen Eisformlinge mit ein. Im Ergebnis sind die Eisformlinge mittelbar über die zugegebene gefrorene Wasserschicht fest mit dem Gefäßboden verbunden.

Der mit Eisformlingen befüllte Getränkebehälter wird vor der Zugabe der flüssigen Getränkeflüssigkeit zunächst auf eine Temperatur T zwischen dem Gefrierpunkt G der Getränkeflüssigkeit und 0°C gekühlt. Mittels dieser Kühlung auf eine Temperatur zwischen den zwei Gefrierpunkten verwässert und stabilisiert sich die Verbindung zwischen Eisformlingen und Gefäß. Die Verbindung kühlt durch und gewinnt an Festigkeit. Auf diese feste Verbindung wird dann erst die Getränkeflüssigkeit zugegeben.

Der mit Eisformlingen und Getränkeflüssigkeit befüllte und verschlossene Getränkebehälter kann auf eine Temperatur unterhalb der Schmelzpunkte des Eisformlings (0°C) und der Getränkeflüssigkeit (G) gekühlt werden. Später, insbesondere kurz vor der Bereitstellung zum Verzehr, kann der Getränkebehälter auf eine Temperatur T zwischen dem Gefrierpunkt G der Getränkeflüssigkeit und 0°C erwärmt werden.

Zur besseren Haltbarkeit oder für Teile des Transportweges kann das Getränk auf Temperaturen unter dem Gefrierpunkt G der Getränkeflüssigkeit durchgefroren werden. In diesem durchgefrorenen Zustand sind sowohl Getränkeflüssigkeit als auch Eisformlinge im gefrorenen festen Zustand. Später dann, beispielsweise am Ort kurz vor der Bereitstellung zum Verzehr, kann das Getränk bei einer Lagerungstemperatur zwischen den zwei Gefrierpunkten G der Getränkeflüssigkeit und 0°C gelagert werden. Dann schmilzt die Getränkeflüssigkeit wieder auf und wird flüssig. Die Temperatur der Getränkeflüssigkeit wird dann nach einer Zeit zwischen dem Gefrierpunkt G und 0°C liegen. Bei dieser Temperatur unterhalb von 0°C, dem Gefrierpunkt der Eisformlinge, bleiben die Eisformlinge jedoch im gefrorenen Zustand und werden beim Servieren auch als solche wahrgenommen. Für das vollständige Gefrieren eignet sich sowohl das Getränk mit am Boden fest gefrorenen Eisformlingen als auch das Getränk mit schwimmenden Eisformlingen.

Bei dem Verfahren zum Herstellen eines Getränks in einem Getränkebehälter in die hier bei beschriebenen Ausführung oder bei anderen Ausgestaltungen kann eine Vorrichtung zum Einführen zumindest eines Eisformlings in dem Getränkebehälter, insbesondere bei der Ausführung des Getränkebehälters mit sich verjüngender Behälteröffnung, verwendet werden, die zumindest eine Führungseinrichtung für die Eisformlinge mit einem endseitigen Ausgang und eine Positioniereinrichtung aufweist, welche den Ausgang der Führungseinrichtung und die Behälteröffnung zueinander ausrichtet. Somit ist gemäß einem Beispiel, welches nicht Teil der beanspruchten Erfindung ist, eine Vorrichtung zum Einführen zumindest eines Eisformlings geschaffen, die in ihren alternativen Ausgestaltungen bei verschiedenen Verfahrensgestaltungen zum Befüllen zum Einsatz kommen kann. In einer Ausführung ist eine Anordnung mit einem Getränkebehälter und einer zugeordneten Vorrichtung zum Einführen zumindest eines Eisformlings in dem einem Getränkebehälter geschaffen.

Die Positioniereinrichtung kann einen Trichter aufweisen, welcher die Behälteröffnung aufnehmen und in einer definierten Position fixieren kann. An der Führungseinrichtung und / oder an der Positioniereinrichtung kann eine Vibrationseinrichtung vorgesehen sein. Die Führungseinrichtung kann als Eiserzeugungseinrichtung vom Durchlaufkühlerprinzip ausgebildet sein und eine Vereinzelungseinrichtung mit zumindest einem Scherelement aufweisen, wobei das Scherelement am Ausgang der Eiserzeugungseinrichtung geführt wird. Das Scherelement kann in unmittelbarer Anlage am Ausgang der Eiserzeugungseinrichtung geführt werden. Je nachdem, wie lange gewartet wird, bevor der nächste Eisformling vom austretenden Eisstrang abgelenkt wird, kann die Länge des Eisformlings variiert werden. Das Abtrennen eines Eisformlings vom Eisstrang wird durch die Vereinzelungseinrichtung durchgeführt. Hierzu weist die Vereinzelungseinrichtung das Scherelement auf, welches am Ausgang der Vereinzelungseinrichtung geführt wird. Das Scherelement ist ausgebildet, den Eisstrang abzuscheren - ist also entsprechend spitz bzw. scharfkantig ausgebildet. Wenn das Schwerelement am Ausgang der Vereinzelungseinrichtung geführt wird, kann dadurch sichergestellt werden, dass die Lage und Ausrichtung des abgetrennten Eisformlings durch Scherkräfte kaum beeinflusst wird und sich der Eisformling beim Einführen in die Behälteröffnung verkantet.

Die Führungseinrichtung kann als Eiserzeugungseinrichtung vom Durchlaufkühlerprinzip ausgebildet sein und eine Vereinzelungseinrichtung mit zumindest einem Scherelement aufweisen, wobei das Scherelement an der Behälteröffnung geführt wird. In diesem Fall kann der Eisformling vom Eisstrang in der Nähe der Behälteröffnung abgeschert werden, nachdem er bereits ein Stück in die Behälteröffnung eingeführt wurde. Der in die Behälteröffnung eingeführte Eisformling wird durch die Wandung der Behälteröffnung bereits geführt und verkantet bei Abscherung knapp oberhalb der Behälteröffnung nur noch sehr unwahrscheinlich.

Das Scherelement kann auf Höhe einer Sollbruchstelle am aus der Eiserzeugungseinrichtung austretenden Eisstrang geführt werden. Es kann ein zweites Scherelement gegenüberliegend zum ersten Scherelement vorgesehen sein.

Die Eiserzeugungseinrichtung kann einen Kühlzylinder aufweisen, in welchem ein Eisstrang erzeugt wird, wobei der Kühlzylinder einen Eingang zum Befüllen mit Wasser und einen Ausgang zum Ausführen des Eisstrangs aufweist. Mit einer solchen Eiserzeugungseinrichtung lässt sich einerseits ein definierter Vorschub des Eisstrangs durch den Kühlzylinder gewährleisten, und andererseits wird der austretende Eisstrang bezüglich seiner Richtung und Austrittsgeschwindigkeit geführt. Der Ausgang des Kühlzylinders kann relativ zur Behälteröffnung positioniert werden, um den austretenden Eisstrang beispielsweise mit der Behälteröffnung zu zentrieren.

Die Führungseinrichtung kann als ein Magazin mit mehreren separierten oder getrennten Eisformlingkammern ausgebildet sein. Ein derartiges Magazin kann beispielsweise mehrere voneinander separierte Eisformlingkammern aufweisen, in welchen einzelne Eisformlinge gefroren wurden. Dann enthält jede Eisformlingkammer einen gefrorenen geformten Eisformling. Ein Eisformling wird in seiner Kammer geführt.

Eine Abscherung an der Sollbruchstelle kann eine im Wesentlichen ebene Bruch- oder Scherfläche ermöglichen. Eine ebene Bruchfläche bietet dem folgenden Eisformling, der als nächstes in die Behälteröffnung eingeführt wird, weniger Angriffsfläche und verringert auch so die Wahrscheinlichkeit des Verkantens des folgenden Eisformlings. Der folgende Eisformling kann sich an dem ersten Eisformling nicht verhaken.

Die Führungseinrichtung kann eine Rutsche aufweisen, wobei ein Eisformling auf der geneigten Rutsche entlang zur Behälteröffnung hin rutschen kann. Bei einer derartigen Ausführungsform können einzelne Eisformlinge eingangsseitig auf die Rutsche befördert werden, sie werden dann auf der Rutsche mit definierter Geschwindigkeit in eine definierte Richtung geleitet und besitzen ausgangsseitig an der Rutsche einen definierten Impuls, welcher mit der Positionierung der Behälteröffnung derart korrespondiert, dass der Eisformling ungehindert in die Behälteröffnung eingeführt werden kann, ohne dort zu verkanten. Die Rutsche sorgt also mit anderen Worten vorbereitend dafür, dass der Eisformling in eine Richtung geleitet wird, in der er wahrscheinlich nicht innerhalb der Behälteröffnung verkantet.

Die Führungseinrichtung kann einen Trichter aufweisen, wobei ein Eisformling im Trichter zur Behälteröffnung hin geleitet wird. Ein Trichter bietet die Möglichkeit, einen Flaschenhals aufzufangen und diesen entlang seiner konisch zulaufenden Wände definiert am Trichterausgang zu zentrieren, wenn die Flasche in den Trichter hineingedrückt wird. Jede Flasche hat nach dem Hereindrücken in den Trichter die gleiche Position relativ zum Trichterausgang. Bei dieser Ausführungsform kann der Trichter wie bezüglich der Rutsche beschrieben die Funktion haben, den Eisformling bezüglich seiner Bewegungsrichtung und Bewegungsgeschwindigkeit auszurichten, so dass er ungehindert in die Behälteröffnung hineingleiten kann. Dies lässt sich unter Nutzung eines Trichters dadurch realisieren, dass der Trichterausgang über oder sogar teilweise innerhalb der Behälteröffnung angeordnet wird.

Mit der Vorrichtung zum Einführen zumindest eines Eisformlings in Getränkebehälter mit sich verjüngender Behälteröffnung kann ein zuverlässiges Einführen ohne Verkanten des Eisformlings in die Behälteröffnung erreicht werden. Die Ausgestaltung des Eisformlings ist grundsätzlich beliebig. Es kann sich einerseits um Eiswürfel handeln, andererseits kann es sich aber häufig auch um zylinderförmige längliche Eisformlinge handeln. Die Länge dieser zylinderförmigen Eisformlinge kann dabei variieren. Hergestellt ist das Eis beispielsweise auf Wasserbasis.

Einer oder mehrere dieser Eisformlinge werden durch die verjüngte Behälteröffnung in den Getränkebehälter eingeführt. Bei dem Getränkebehälter kann es sich beispielsweise um eine Flasche oder ein Glas, wie Joghurtgläser oder Gurkengläser, handeln, welche zur Aufnahme von Getränkeflüssigkeiten kälter als 0°C geeignet sind.

Die Führungseinrichtung für den Eisformling dient insbesondere dazu, den Wassereisformling außerhalb des Getränkebehälters in Richtung auf die verjüngte Behälteröffnung hin zu führen, derart, dass der Eisformling in die Behälteröffnung verkantungsfrei eingeführt werden kann. Die Führungseinrichtung hat in einer Ausgestaltung einen endseitigen Ausgang. An diesem Ausgang tritt der Eisformling aus der Führungseinrichtung aus, und zwar in definierter Lage und mit definiertem Impuls - also Richtung und Geschwindigkeitskomponente. Mit anderen Worten die Führungseinrichtung dafür sorgen, dass der Eisformling an ihrem endseitigen Ausgang derart ausgeführt wird, dass er mit definierter Geschwindigkeit in eine definierte Richtung fällt. So kann im Zusammenhang mit der Positioniereinrichtung ein verkantungsfreies Einführen des Eisformlings in die verjüngte Behälteröffnung sichergestellt werden. Die Positioniereinrichtung kann eine Relativpositionierung zwischen dem Ausgang der Führungseinrichtung und der Behälteröffnung schaffen, indem die Führungseinrichtung und / oder die Behälteröffnung so lange zu einander bewegt werden, bis sie beispielsweise zentrisch vor einander stehen.

Eine Vibrationseinrichtung kann die Führungseinrichtung oder deren Ausgang bzw. die Positioniereinrichtung in Schwingungen versetzen. Sollte ein Eisformling beim Einführen in die verjüngte Behälteröffnung verkanten, so kann dieser durch die Schwingungen von der Vibrationseinrichtung über die Führungseinrichtung und/oder die Positioniereinrichtung durch die Schwingungen freigerüttelt werden und bewegt sich dann doch noch in die Behälteröffnung, ohne dass ein manuelles Eingreifen durch eine Bedienperson erforderlich wird.

Nachdem die Eiserzeugungseinrichtung als Führungseinrichtung vermittels der Positioniereinrichtung mit der Behälteröffnung ausgerichtet wurde, bewegt sich der aus der Eiserzeugungseinrichtung austretende Eisstrang langsam in die Behälteröffnung hinein. Zum Zeitpunkt des Abscherens des Eisformlings vom Eisstrang befindet sich also der Eisformling bereits ein Stück innerhalb der verjüngten Behälteröffnung und besitzt durch den Kontakt zur Wandung der Behälteröffnung eine gewisse Stabilität gegen Verkanten. Durch Führung des Scherelements am Ausgang der Eiserzeugungseinrichtung kann eine auf dem separierten Eisformling wirkende Scherkraft verringert werden.

### Beschreibung von Ausführungsbeispielen

Weitere Ausführungsbeispiel werden nachfolgend unter Bezugnahme auf Figuren einer Zeichnung näher erläutert. Es zeigt:
- Fig. 1: ein abgefülltes Getränk mit am Gefäßboden fest haftenden Eisformlingen;
- Fig. 2: das Verfahren zum Festhaften der Eisformlinge am Gefäßboden;
- Fig. 3: ein abgefülltes Getränk mit den frei schwimmenden Eisformlingen;
- Fig. 4: das Verfahren zum freischwimmenden Einbringen der Eisformlinge;
- Fig. 5: eine schematische Darstellung einer Vorrichtung zum Einbringen von Wassereisformlingen in einem Getränkebehälter mit einer Erzeugungseinrichtung vom Durchlaufkühlerprinzip im Querschnitt;
- Fig. 6: eine schematische Darstellung einer weiteren Vorrichtung zum Einbringen von Wassereisformlingen in einem Getränkebehälter mit linear verschiebbarem Magazin mit mehreren Eisformlingkammern im Querschnitt;
- Fig. 7: eine schematische Darstellung einer anderen Vorrichtung zum Einbringen von Wassereisformlingen in einem Getränkebehälter mit geneigter Rutsche im Querschnitt und
- Fig. 8: eine schematische Darstellung einer noch weiteren Vorrichtung zum Einbringen von Wassereisformlingen in einem Getränkebehälter mit Trichter im Querschnitt.

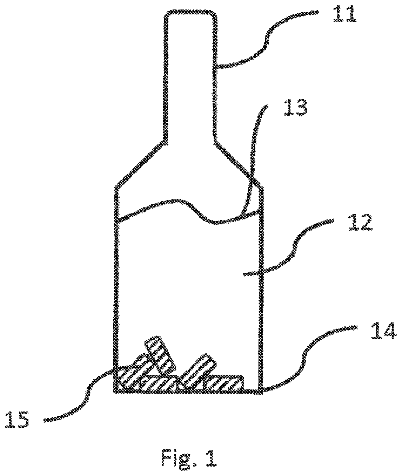

Fig. 1 zeigt ein Getränkebehälter oder Gefäß 11, welches hier zum Transport des Getränkes als verschließbare Flasche ausgebildet ist. In dem Getränkebehälter 11 befindet sich die flüssige alkoholhaltige oder nicht alkoholhaltige Getränkeflüssigkeit 12, welche bis zum Füllniveau 13 in den Getränkebehälter 11 eingefüllt ist.

Am Gefäß- oder Behälterboden 14 haften Eisformlinge 15 fest, die aufgrund der Herstellung unter Verwendung von Wasser auch als Wassereisformlinge bezeichnet werden können. Die Eisformlinge 15 sind hier als zylinderförmige Eiswürfel ausgebildet, die durch den Flaschenhals hindurch passen. Die Eisformlinge 15 haften nicht nur am Gefäßboden 14 fest, sondern auch unter einander. Mit anderen Worten entsteht also ein festes Eisklumpen-Gebilde am Gefäßboden 14, welches dort selbst dann haften bleibt, wenn der Getränkebehälter 11 beispielsweise auf den Kopf gedreht wird.

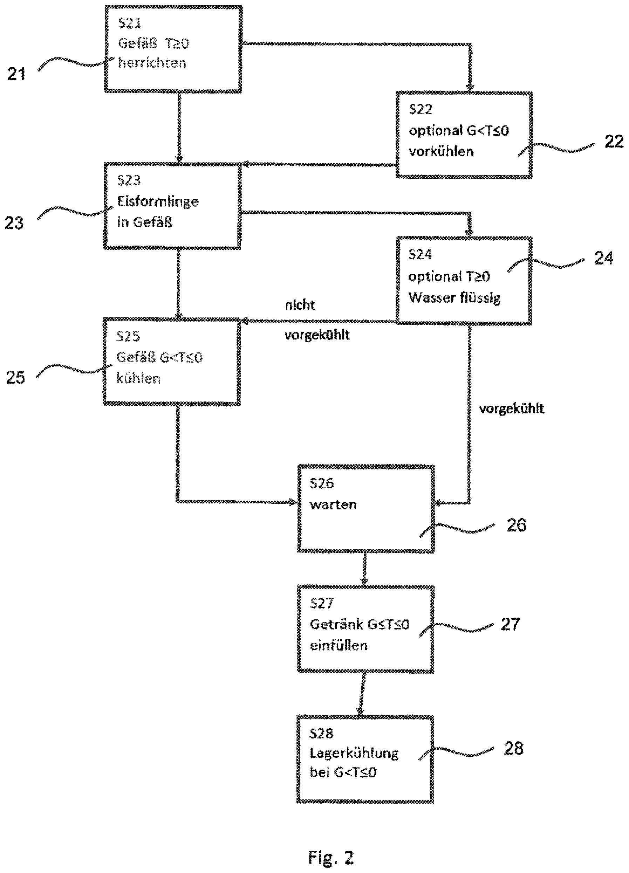

Fig. 2 zeigt eine schematische Darstellung zu einem Verfahren zum Herstellen eines Getränks nach Fig. 1. In Schritt 21 wird zunächst das zu befüllende Gefäß hergerichtet. Dies geschieht in der Regel bei Temperaturen von T ≥ 0°C, insbesondere bei Raumtemperatur.

Hierauf folgend werden in Schritt 23 Eisformlinge in den Getränkebehälter eingebracht. Da die Eisformlinge aus Wasser gefroren sind, haben sie einen Gefrierpunkt = Schmelzpunkt von 0°C. Sie werden an ihrer Oberfläche durch das wärmere Gefäß leicht anschmelzen. Es entsteht ein Wasserfilm zwischen Eisformlingen und Gefäß 11. Die Eisformlinge können beim Einfüllen auch bereits einen Wasserfilm auf ihrer Oberfläche aufweisen.

Danach wird in Schritt 25 der Getränkebehälter auf eine Temperatur T zwischen dem Gefrierpunkt G der Getränkeflüssigkeit und 0°C gekühlt. Dabei gefriert der zuvor entstandene Wasserfilm und die Eisformlinge frieren am Gefäß fest.

Die Grenzwerte von Bereichen in dieser Anmeldung (hier G und 0 Grad Celsius) können jeweils mit erreicht werden.

Der Getränkebehälter 11 kann auch kälter als der Gefrierpunkt G gekühlt werden. Dann friert die Getränkeflüssigkeit ebenfalls an der Gefäßwandung fest. Es kann maximal so viel Flüssigkeit anfrieren wie die Flasche durch ihre spezifische Wärmekapazität an Energie der Getränkeflüssigkeit entziehen kann.

Nach einer Wartezeit in Schritt 26 wird in Schritt 27 die Getränkeflüssigkeit in den Getränkebehälter zugegeben. Die Temperatur der zugegebenen Getränkeflüssigkeit liegt zwischen ihrem Gefrierpunkt G und 0°C.

Im Ergebnis bedeutet dies, dass die Getränkeflüssigkeit die Eisformlinge, welche einen Gefrierpunkt von 0°C haben, fortdauernd kühlt und gefroren hält. Es wird durch die kältere Getränkeflüssigkeit verhindert, dass die Eisfortnlinge an ihrer Oberfläche beginnen, an zu schmelzen.

Um die fortdauernde Kühlung zu erreichen, wird in Schritt 28 die Lagerkühlung bei einer Temperatur zwischen oder gleich den zwei Gefrierpunkten durchgeführt.

Im optionalen Schritt 24 wird flüssiges Wasser mit einer Temperatur > 0°C in einer Menge zugegeben, die den Gefäßboden bedeckt.

Der Zeitpunkt der Wasserzugabe liegt in der Nähe der Zugabe der Eisformlinge. Die flüssige Wassermenge kann zeitgleich zur Zugabe der Eisformlinge erfolgen, sie kann aber auch kurz davor oder kurz danach erfolgen.

Entscheidend ist, dass die flüssige Wassermenge nicht festgefroren ist, bevor die Eisformlinge zugegeben werden. Dann nämlich friert die flüssige Wassermenge die Eisformlinge praktisch als Bindemittel am Gefäß fest, wenn die Gesamteinheit danach auf eine Temperatur ≤ 0°C gekühlt wird.

Wenn zuvor in Schritt 22 der Getränkebehälter optional auf eine Temperatur T zwischen dem Gefrierpunkt G der Getränkeflüssigkeit und 0°C vorgekühlt wird, dann friert die in Schritt 24 zugegebene flüssige Wassermenge relativ schnell zwischen Eisformlingen und Gefäß fest, ohne dass es einer nachgelagerten Kühlung, wie in Schritt 25, bedarf. Diese nachgelagerte Kühlung in Schritt 25 kann überdies jedoch trotzdem noch durchgeführt werden.

Der Getränkebehälter kann auch kälter als der Gefrierpunkt G gekühlt werden. Dann friert die Getränkeflüssigkeit ebenfalls an der Gefäßwandung fest. Es kann maximal so viel Flüssigkeit anfrieren wie die Flasche durch ihre spezifische Wärmekapazität an Energie der Getränkeflüssigkeit entziehen kann.

Bei erfolgter Vorkühlung in Schritt 22 kann aber von Schritt 24 direkt zu Schritt 26, dem Warteschritt, gesprungen werden.

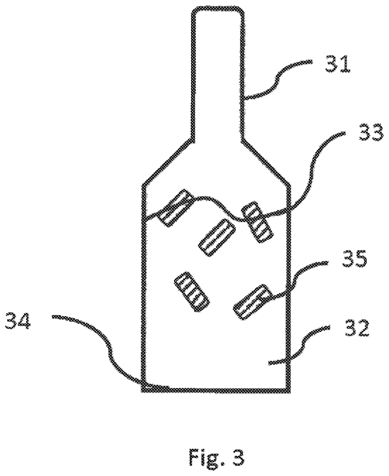

Fig. 3 zeigt ein abgefülltes Getränk mit zwei darin schwimmenden Eisformlingen gemäß einem Beispiel, welches nicht Teil der beanspruchten Erfindung ist. Der Getränkebehälter 31 ist verschließbar, zum Beispiel als transportgeeignete Flasche ausgebildet. Im Gefäß 31 befindet sich die flüssige Getränkeflüssigkeit 32 bis zum Zustandsniveau 33. In der flüssigen Getränkeflüssigkeit 32 schwimmen hier frei die Eisformlinge 35. Die Eisformlinge 35 sind nicht mit dem Gefäßboden verbunden und sie sind auch nicht untereinander festgefroren. Die Eisformlinge 35 schwimmen vollkommen frei in der Getränkeflüssigkeit 32.

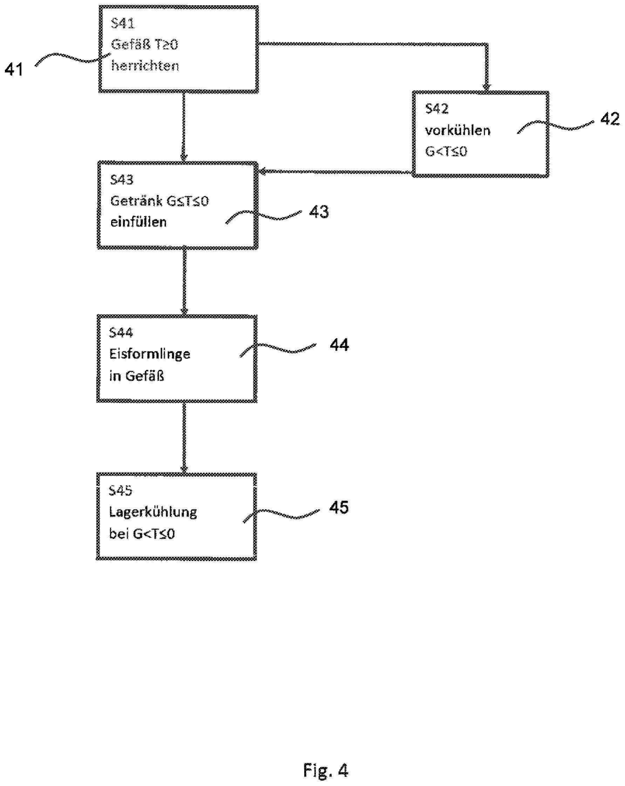

Fig. 4 zeigt eine schematische Darstellung zu einem Verfahren zum Herstellen eines Getränks nach Fig. 3 gemäß einem Beispiel, welches nicht Teil der beanspruchten Erfindung ist.

In Schritt 41 wird zunächst der Getränkebehälter zur Befüllung mit einer Temperatur T ≥ 0°C hergerichtet. In der Regel findet die Abfüllung bei Raumtemperatur statt. Optional kann in Schritt 42 der Getränkebehälter auch eine Temperatur zwischen dem Gefrierpunkt G der Getränkeflüssigkeit und 0°C vorgekühlt werden.

Der Getränkebehälter 31 kann auch kälter als Gefrierpunkt G gekühlt werden. Dann friert die Getränkeflüssigkeit ebenfalls an der Gefäßwandung fest. Es kann maximal so viel Flüssigkeit anfrieren wie die Flasche durch ihre spezifische Wärmekapazität an Energie der Getränkeflüssigkeit entziehen kann. Dies ist jedoch optional. Es kann auch direkt von Schritt 41 zum Schritt 43 gesprungen werden. In Schritt 43 wird die Getränkeflüssigkeit mit einer Temperatur T zwischen ihrem Gefrierpunkt G und 0°C eingefüllt.

In Schritt 44 werden dann die Eisformlinge in den Getränkebehälter gegeben, in welchem sich bereits die Getränkeflüssigkeit mit einer Temperatur ≤ 0°C (Gefrierpunkt der Eisformlinge) befindet.

Um eine fortdauernde Kühlung zur Fixierung der Kälteverhältnisse zu gewährleisten, wird in Schritt 45 die Lagerkühlung bei einer Temperatur zwischen oder gleich den zwei Gefrierpunkten durchgeführt.

Je nach Kälteverhältnissen kann es sinnvoll sein, den optionalen Vorkühlschritt 42 einzuschieben, um zu verhindern, dass die Getränkeflüssigkeit durch das raumtemperaturwarme Gefäß auf eine Temperatur von > 0°C erwärmt wird. Dies ist nämlich möglichst zu verhindern, um ein oberflächliches Anschmelzen der Eisformlinge zu vermeiden. Die Getränkeflüssigkeit mit ihrer Temperatur kälter als 0°C, welche sich zum Zeitpunkt der Zugabe der Eisformlinge bereits im Gefäß befindet, verhindert wirksam ein oberflächliches Anschmelzen der Eisformlinge. Diese haben somit keine Gelegenheit, aneinander oder an der Gefäßwand fest zu frieren. Im Ergebnis bleiben die Eisformlinge bei dieser alternativen Ausführung voneinander separiert freischwimmend innerhalb der Getränkeflüssigkeit vereinzelt.

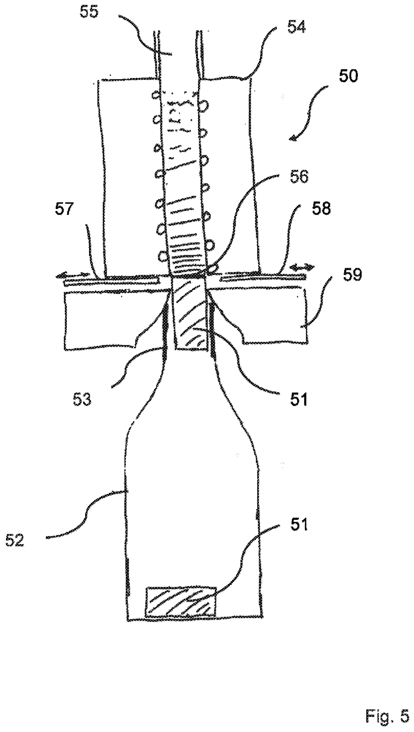

Fig. 5 zeigt eine schematische Darstellung einer Vorrichtung 50 zum Einbringen von Wassereisformlingen 51 in einem Getränkebehälter 52 mit sich verjüngender Behälteröffnung 53. Als Führungseinrichtung für die Wassereisformlingen 51 dient eine Eiserzeugungseinrichtung vom Durchlaufkühlerprinzip 54. Am Eingang 55 der Eiserzeugungseinrichtung 54 wird flüssiges Wasser eingeleitet und innerhalb der Eiserzeugungseinrichtung 54 auf eine Temperatur unterhalb des Gefrierpunktes gekühlt, so dass am Ausgang 56 ein Eisstrang austritt. Vom Eisstrang wird hier der Eisformling 2 abgetrennt.

Die Separierung des Eisformlings 51 vom Eisstrang erfolgt mittels zwei gegenüberliegenden Scherelemente 57, 58, welche den Eisformling 51 beidseitig vom Eisstrang abtrennen. Die Schwerelemente 57, 58 bewegen sich in Pfeilrichtung senkrecht zum Eisstrang und üben auf diesen eine senkrechte Trennkraft in radialer Richtung aus. Sie wirken praktisch wie eine Zange und quetschen den Eisstrang durch. Durch die gegenüberliegende Anordnung der Scherelemente 57, 58 entsteht zwischen den beiden Druckpunkten eine halbwegs ebene Bruchfläche. Dies bietet den oben beschriebenen Verkantungsschutz.

Die Führungseinrichtung hier in Gestalt der Eiserzeugungseinrichtung ist mit einer Positioniereinrichtung 59 verbunden. Die Positioniereinrichtung 59 ist hier im Querschnitt dargestellt und als Trichter ausgeführt. Sie hat im Inneren einen Trichtertopf, welcher in Richtung des zu befüllenden Getränkebehälters 52 geöffnet ist. Beim Befüllen wird in diesem Beispiel der Getränkebehälter 52, hier in Form einer Flasche, von unten gegen die Positioniereinrichtung 59 gedrückt, wobei die verjüngte Behälteröffnung 53, hier in Gestalt des Flaschenhalses, von unten in den Trichtertopf der Positioniereinrichtung 59 hineingedrückt wird, und dadurch die Achse der verjüngten Behälteröffnung 53 mit der Trichterachse zentriert wird.

Da der Ausgang 56 der Eiserzeugungseinrichtung 54 ebenfalls zentriert zur Trichterachse der Positioniereinrichtung 59 angeordnet ist, ist im Ergebnis die Achse des Ausgangs 56 der Eiserzeugungseinrichtung 54 mit der Achse der verjüngten Behälteröffnung 53 zentriert, wodurch die Positioniereinrichtung 59 die Aufgabe erfüllt, den Ausgang 55 der Eiserzeugungseinrichtung 54 und die verjüngte Behälteröffnung 53 zu einander auszurichten. Im Ergebnis bewegt sich dann der aus dem Ausgang 56 der Eiserzeugungseinrichtung 54 austretende Eisstrang exakt in die verjüngte Behälteröffnung 53 hinein, ohne irgendeine schräge Scherkraft zu erfahren und dadurch zu verkanten. Die Scherelemente 57, 58 scheren den Eisformling 51 vom Eisstrang ab, und dieser kann dann ungehindert in den Getränkebehälter 52 hineinfallen. Die verjüngte Behälteröffnung 53 ist dann wieder frei für den nächsten Eisformling.

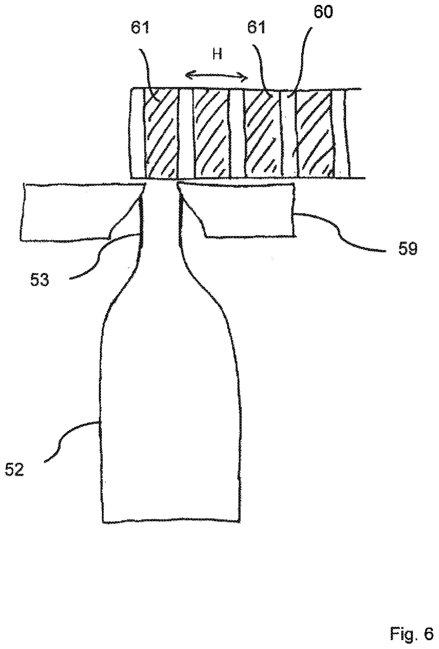

Fig. 6 zeigt eine schematische Darstellung einer weiteren Vorrichtung zum Einbringen von Wassereisformlingen 51 in einem Getränkebehälter 52, bei welcher die Führungseinrichtung mit einem Magazin 60 mit mehreren separierten Eisformlingkammern 61 ausgebildet ist. Innerhalb der Eisformlingkammern 61 befinden sich gefrorene Eisformlinge, welche durch einen Auswurfmechanismus aus den Eisformlingkammern 61 herausbefördert werden können.

Damit die Eisformlinge 51 verkantungsfrei in die verjüngte Behälteröffnung 53 hineingleiten können, sorgt die Positioniereinrichtung 59, hier in Form eines Trichters, für die Ausrichtung der verjüngten Behälteröffnung 53 zur Eisformlingkammer 61, welcher ein Eisformling herausbefördert und in den Getränkebehälter 52 hineinbefördert werden soll.

Dazu kann die trichterförmige Positioniereinrichtung 59 die verjüngte Behälteröffnung 53, hier in Form eines Flaschenhalses wie oben beschrieben, positionieren. Das Magazin 60 mit den Eisformlingkammern 61 wird dann relativ zur Positioniereinrichtung 59 derart positioniert, dass die Achse einer Eisformlingkammer mit der Achse des Trichters der Positioniereinrichtung 59 bzw. der verjüngten Behälteröffnung 53 korrespondiert. Wird dann der Eisformling aus der zentrierten Eisformlingkammer 61 herausbefördert, so kann dieser verkantungsfrei in die verjüngte Behälteröffnung 53 hineingleiten.

Das Magazin 60 wird danach entlang der Pfeilrichtung H horizontal soweit verschoben, bis die nächste benachbarte Eisformlingkammer 61 mit ihrer Mittelachse wieder mit der Mittelachse der verjüngten Behälteröffnung 53 korrespondiert. Der in dieser nun zentrierten Eisformlingkammer 61 befindliche Eisformling kann einerseits in den noch unter der Positioniereinrichtung 59 positionierten Getränkebehälter 52 eingeführt werden. Andererseits kann aber der unter der Positioniereinrichtung 59 positionierte Getränkebehälter 52 zwischenzeitlich ausgetauscht werden, und der in der Eisformlingkammer 61 befindliche Eisformling wird dann in einen neuen Getränkebehälterbereich 52 eingeführt.

Danach wird das Magazin 60 entlang der Pfeilrichtung H wieder um eine Eisformlingkammer 61 weiterbewegt, bis die Mittelachse der nächsten Eisformlingkammer 61 relativ zur Mittelachse der verjüngten Behälteröffnung 53 zentriert ist. In diesem Ausführungsbeispiel werden die einzelnen Eisformlingkammern 61 vermittels eines Magazins 60 zusammengefasst und an der Positioniereinrichtung 10 bzw. an der Behälteröffnung 53 vorbeigeführt. Das Vorbeiführen der einzelnen Eisformlingkammern 61 an der Behälteröffnung 53 kann aber beispielsweise auch durch eine Endloskette erfolgen, an welcher einzelne Eisformlingkammern befestigt sind.

Anstatt des gezeigten matrixartigen Magazins 11 kann beispielsweise auch ein kreisförmiger Revolver zum Einsatz kommen. Dieser würde dann nicht wie das Magazin 11 translatorisch ausgerichtet, sondern würde eine rotatorische Ausrichtung erfahren müssen.

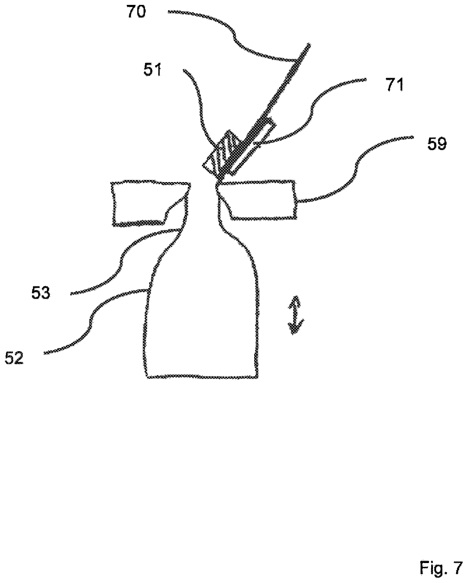

Fig. 7 zeigt eine schematische Darstellung einer anderen Vorrichtung zum Einbringen von Wassereisformlingen 51 in einem Getränkebehälter 52, wobei die Führungseinrichtung mit einer Rutsche 70 gebildet ist. Die Rutsche 70 ist mit der trichterförmigen Positioniereinrichtung 59 verbunden. Die trichterförmige Positioniereinrichtung 59 kann die verjüngte BehälterÖffnung 53 des Getränkebehälters 52 wie oben beschrieben positionieren. Die mit der trichterförmigen Positioniereinrichtung 59 verbundene Rutsche 70 sorgt dafür, dass ein auf der Rutsche 70 befindlicher Eisformling 51 eine definierte Bewegungsrichtung und Bewegungsgeschwindigkeit erhält. Die Verbindung von Rutsche 70 und Positioniereinrichtung 59 ist derart ausgestaltet, dass der Ausgang der Rutsche 70 in den Trichter der Positioniereinrichtung 59 mündet, so dass ein Eisformling 51, welcher die Rutsche 70 hinabrutscht, am Ausgang der Rutsche 70 in die trichterförmige Aussparung der Positioniereinrichtung 59 hineinrutscht.

Im Ergebnis führt dies dazu, dass der Eisformling 51 dann in die darunter positionierte verjüngte Behälteröffnung 53 eingeführt werden kann. Da die darüber liegende Rutsche 70 den Eisformling 51 bereits eine definierte Bewegungsrichtung und Bewegungsgeschwindigkeit aufgeprägt hat, rutscht der Eisformling in die verjüngte Behälteröffnung 53 verkantungsfrei herein und durch diese hindurch in den Getränkebehälter 52.

An der Rutsche 70 ist eine Vibrationseinrichtung 71 angeordnet, welche die Rutsche 70 in Schwingungen versetzen kann. Die Schwingungen der Rutsche 70 wiederum über- tragen sich weiter auf einen auf der Rutsche 70 befindlichen Eisformling 51. Die Schwingungen haben den Vorteil, dass eine Anhaftung des Eisformlings 51 an der Rutsche 70 verringert werden kann und falls der Eisformling 51 sich doch bei Einführung in die verjüngte Behälteröffnung 53 verkanten sollte, sich diese Verkantung löst.

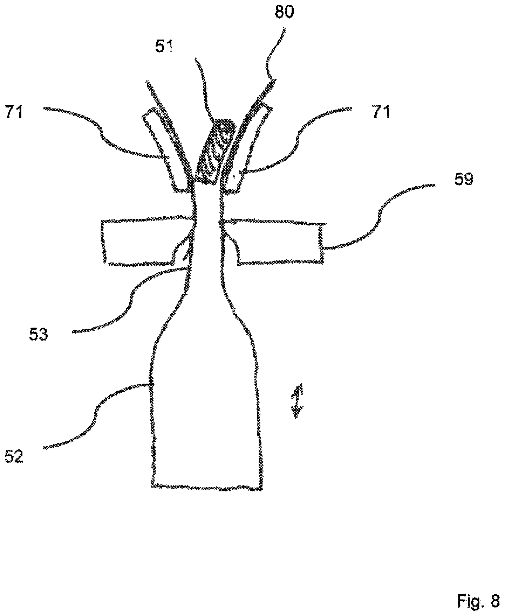

Fig. 8 zeigt eine schematische Darstellung einer noch weiteren Vorrichtung zum Einbringen von Wassereisformlingen 51 in einem Getränkebehälter 52, wobei die Führungseinrichtung einen Trichter 80 aufweist. Der Trichter 80 ist mit seinem verjüngten Trichterausgang an der Positioniereinrichtung 59 derart befestigt, dass die Mittelachse des verjüngten Trichterausgangs des Trichters 80 mit der Mittelachse der trichterförmigen Aussparung der Positioniereinrichtung 59 korrespondiert und somit auch mit der Mittelachse der verjüngten Behälteröffnung 54 korrespondiert, die von unten in die Positioniereinrichtung 59 hineingedrückt wird.

Ein Eisformling 51, der in den Trichter 80 hineingegeben wird, wird durch den Trichter 80 in eine definierte Bewegungsrichtung mit definierter Bewegungsgeschwindigkeit gelenkt. Und zwar wird sich der Eisformling 51 so ausrichten, dass er senkrecht durch den Ausgang des Trichters 80 gleiten wird.

Durch die beschriebene Anordnung des Trichters 80 befindet sich dann der Eisformling 51 in einem Bewegungszustand, in welchem er ungehindert und verkantungsfrei in die verjüngte Behälteröffnung 53 hineingleiten kann. Um den Trichter 80 herum (hier im Querschnitt dargestellt) ist eine Vibrationseinrichtung 71 angeordnet, welche den Trichter 80 in Schwingungen versetzen kann. Diese Schwingungen übertragen sich auf einen anliegenden im Trichter 80 befindlichen Eisformling 51 weiter und können wie oben beschrieben Haftungskräfte des Eisformlings 51 reduzieren bzw. ein Verkanten im Ausgang des Trichters 80 bzw. in der verjüngten Behälteröffnung 53 lösen.

Die in der vorstehenden Beschreibung, den Ansprüchen sowie der Zeichnung offenbarten Merkmale können sowohi einzeln als auch in beliebiger Kombination für die Verwirklichung der verschiedenen Ausführungen von Bedeutung sein.

### Bezugszeichenliste

- 11, 31, 52: Getränkebehälter
- 12, 32: flüssige Getränkeflüssigkeit
- 13, 33: Füllstandsniveau
- 14,34: Boden
- 15,35,51: Eisformling
- 50: Vorrichtung
- 53: Verjüngte Behälteröffnung
- 54: Eiserzeugungseinrichtung vom Durchlaufkühlerprinzip
- 55: Eingang
- 56: Ausgang
- 57,58: Scherelemente
- 59: Positioniereinrichtung
- 60: Magazin
- 61: Eisformlingkammer
- 70: Rutsche
- 71: Vibrationseinrichtung
- 80: Trichter

## Patentansprüche

1. Verfahren zum Herstellen eines Getränks in einem Getränkebehälter, mit den folgenden Schritten:
- Bereitstellen eines zu befüllenden Getränkebehälters (11; 31);
- Einbringen eines Kühlmittels in dem Getränkebehälter (11; 31) durch eine Behälteröffnung, wobei das Kühlmittel mehrere Wassereisformlinge (15; 35) aufweist, wobei die mehreren Wassereisformlinge (15; 35) auf einen Boden (14; 34) des Getränkebehälters (11; 31) fallen und diesen berühren und wobei der Boden (14; 34) des Getränkebehälters (11; 31) eine höhere Temperatur als 0° C hat und deshalb die mehreren Wassereisformlinge (15; 35) äußerlich anschmilzt;
- Befüllen des Getränkebehälters (11; 31) mit einer Getränkeflüssigkeit (12; 32) mit einer Temperatur kleiner 0° durch die Behälteröffnung nach dem Einbringen des Kühlmittels mit den mehreren Wassereisformlingen (15; 35), wobei die Wassereisformlinge (15; 35) am Boden (14; 34) des Getränkebehälters (11; 31) haften und nicht aufschwimmen, wenn die Getränkeflüssigkeit (12; 32) zugegeben wird;
- Verschließen der Behälteröffnung mit einem Einwegverschluss und
- gekühltes Lagern des befüllten Getränkebehälters (11; 31);
wobei
- der Getränkebehälter (11; 31) einen sich zur Behälteröffnung hin verjüngenden Behälterabschnitt aufweist, der mit dem Einwegverschluss verschlossen wird;
- das Kühlmittel mit den mehreren Wassereisformlingen (15; 35) und die Getränkeflüssigkeit (12; 32) nach dem Passieren der Behälteröffnung durch den sich verjüngenden Behälterabschnitt eingebracht werden und
- die mehreren Wassereisformlinge (15; 35) in einer räumlichen Dimension größer als ein Durchmesser der Behälteröffnung sind.

2. Verfahren nach Anspruch 1, **dadurch gekennzeichnet, dass** der befüllte Getränkebehälter (11; 31) bei einer Kühltemperatur gelagert wird, die höher ist als der Gefrierpunkt der Getränkeflüssigkeit (12; 32).

3. Verfahren nach Anspruch 1 oder 2, **dadurch gekennzeichnet, dass** die Behälteröffnung mit einem Einwegverschluss aus der folgenden Gruppe verschlossen wird: Kronenkorken, Korken, Schraubverschluss, Twist-Off Verschluss, Bügelverschluss und Heißsiegel-Verschlüsse.

4. Verfahren nach mindestens einem der vorangehenden Ansprüche, dadurch **ge k e n n - z e i c h n e t,** dass eine alkoholhaltige Getränkeflüssigkeit (12; 32), die anteilig Ethanol enthält, und / oder eine nichtalkoholhaltige Getränkeflüssigkeit (12; 32) eingefüllt werden, die anteilig Glycerin enthält.

5. Verfahren nach mindestens einem der vorangehenden Ansprüche, **dadurch gekenn**- **z e i c h n e t,** dass beim Einbringen des Kühlmittels mit den mehreren Wassereisformlingen (15; 35) zusätzlich eine Menge flüssiges Wasser in das Getränkebehälter (11; 31) eingefüllt wird, die den Behälterboden (14; 34) des Getränkebehälters (11; 31) bedeckt.

6. Verfahren nach mindestens einem der vorangehenden Ansprüche, dadurch **gekenn- z e i c h n e t,** dass der befüllte Getränkebehälter (11; 31) beim gekühlten Lagern auf eine Kühltemperatur gekühlt wird, die kleiner ist als eine Schmelztemperatur der Getränkeflüssigkeit (12; 32).

7. Verfahren nach mindestens einem der vorangehenden Ansprüche, **dadurch gekennzeichnet, dass** die mehreren Wassereisformlinge (15; 35; 51) über eine Führungseinrichtung der Behälteröffnung zugeführt wird, wobei die Führungseinrichtung mittels einer Positioniereinrichtung (59) relativ zur Behälteröffnung positioniert wird.

8. Verfahren zum Herstellen eines Getränks in einem Getränkebehälter, mit den folgenden Schritten:
- Bereitstellen eines zu befüllenden Getränkebehälters (11; 31);
- Kühlen des Getränkebehälters (11; 31) vor Einbringen eines Kühlmittels und vor dem Befüllen mit einer Getränkeflüssigkeit (12; 32) auf eine Temperatur zwischen dem Gefrierpunkt der Getränkeflüssigkeit (12; 32) und 0 Grad Celsius;
- Einbringen des Kühlmittels in dem Getränkebehälter (11; 31) durch eine Behälteröffnung, wobei das Kühlmittel mehrere Wassereisformlinge (15; 35) aufweist;
- beim Einbringen des Kühlmittels, Einbringen einer Menge flüssigen Wassers mit einer Temperatur größer 0 °C, die einen Boden (14; 34) des Getränkebehälters bedeckt, sodass der Boden (14; 34) das zugegebene Wasser darauf gefriert und die mehreren Wassereisformlinge (15; 35) mit einfriert;
- Befüllen des Getränkebehälters (11; 31) mit der Getränkeflüssigkeit (12; 32) durch die Behälteröffnung nach dem Einbringen des Kühlmittels mit den mehreren Wassereisformlingen (15; 35);
- Verschließen der Behälteröffnung mit einem Einwegverschluss und
- gekühltes Lagern des befüllten Getränkebehälters (11; 31);
wobei
- der Getränkebehälter (11; 31) einen sich zur Behälteröffnung hin verjüngenden Behälterabschnitt aufweist, der mit dem Einwegverschluss verschlossen wird;
- das Kühlmittel mit den mehreren Wassereisformlingen (15; 35) und die Getränkeflüssigkeit (12; 32) nach dem Passieren der Behälteröffnung durch den sich verjüngenden Behälterabschnitt eingebracht werden und
- die mehreren Wassereisformlinge (15; 35) in einer räumlichen Dimension größer als ein Durchmesser der Behälteröffnung sind.

9. Verfahren zum Herstellen eines Getränks in einem Getränkebehälter, mit den folgenden Schritten:
- Bereitstellen eines zu befüllenden Getränkebehälters (11; 31);
- Einbringen eines Kühlmittels in dem Getränkebehälter (11; 31) durch eine Behälteröffnung, wobei das Kühlmittel mehrere Wassereisformlinge (15; 35) aufweist, wobei die mehreren Wassereisformlinge (15; 35) auf einen Boden (14; 34) des Getränkebehälters (11; 31) fallen und diesen berühren und wobei der Boden (14; 34) des Getränkebehälters (11; 31) eine höhere Temperatur als 0° C hat und deshalb die mehreren Wassereisformlinge (15; 35) äußerlich anschmilzt;
- Kühlen des Getränkebehälters (11; 31) vor dem Befüllen mit einer Getränkeflüssigkeit (12; 32) auf eine Temperatur zwischen dem Gefrierpunkt der Getränkeflüssigkeit (12; 32) und 0 Grad Celsius;
- Befüllen des Getränkebehälters (11; 31) mit einer Getränkeflüssigkeit (12; 32) mit einer Temperatur kleiner gleich 0° C durch die Behälteröffnung nach dem Einbringen des Kühlmittels mit den mehreren Wassereisformlingen (15; 35), wobei die Wassereisformlinge (15; 35) am Boden (14; 34) des Getränkebehälters (11; 31) haften und nicht aufschwimmen, wenn die Getränkeflüssigkeit (12; 32) zugegeben wird;
- Verschließen der Behälteröffnung mit einem Einwegverschluss und
- gekühltes Lagern des befüllten Getränkebehälters (11; 31);
wobei
- der Getränkebehälter (11; 31) einen sich zur Behälteröffnung hin verjüngenden Behälterabschnitt aufweist, der mit dem Einwegverschluss verschlossen wird;
- das Kühlmittel mit den mehreren Wassereisformlingen (15; 35) und die Getränkeflüssigkeit (12; 32) nach dem Passieren der Behälteröffnung durch den sich verjüngenden Behälterabschnitt eingebracht werden und
- die mehreren Wassereisformlinge (15; 35) in einer räumlichen Dimension größer als ein Durchmesser der Behälteröffnung sind.

## Claims

1. A method for producing a beverage in a beverage container, with the following steps:
- providing a beverage container (11; 31) to be filled,
- introducing a cooling agent in the beverage container (11; 31) through a container opening, wherein the cooling agent has several water ice moldings (15; 35), wherein the several water ice moldings (15; 35) fall onto a bottom (14; 34) of the beverage container (11; 31) and touch the latter and wherein the bottom (14; 34) of the beverage container (11; 31) has a temperature higher than 0 °C and thus partly melts the several water ice moldings (15; 35) externally;
- filling the beverage container (11; 31) with a beverage liquid (12; 32) with a temperature of less than 0 °C through the container opening after the introduction of the cooling agent with the several water ice moldings (15; 35), wherein the water ice moldings (15; 35) adhere to the bottom (14; 34) of the beverage container (11; 31) and do not float when the beverage liquid (12; 32) is added;
- closing the container opening by means of a disposable closure and
- cooled storing of the filled beverage container (11; 31);
wherein
- the beverage container (11; 31) has a container section, which tapers towards the container opening and which is closed by means of the disposable closure;
- the cooling agent with the several water ice moldings (15; 35) and the beverage liquid (12; 32) are introduced through the tapering container section after passing the container opening and
- the several water ice moldings (15; 35) are larger than a diameter of the container opening in one spatial dimension.

2. The method according to claim 1, **characterized in that** the filled beverage container (11; 31) is stored at a cooling temperature, which is higher than the freezing point of the beverage liquid (12; 32).

3. The method according to claim 1 or 2, **characterized in that** the container opening is closed by means of a disposable closure from the following group: crown cork, cork, screw closure, twist-off closure, flip-top closure and hot sealing closures.

4. The method according to at least one of the preceding claims, **characterized in that** an alcoholic beverage liquid (12; 32), which contains a percentage of ethanol and/or a non-alcoholic beverage liquid (12; 32), which contains a percentage of glycerin, are filled in.

5. The method according to at least one of the preceding claims, **characterized in that** when introducing the cooling agent with the several water ice moldings (15; 35), a quantity of liquid water, which covers the container bottom (14; 34) of the beverage container (11; 31), is additionally filled into the beverage container (11; 31).

6. The method according to at least one of the preceding claims, **characterized in that** during the cooled storing, the filled beverage container (11; 31) is cooled to a cooling temperature, which is smaller than a melting temperature of the beverage liquid (12; 32).

7. The method according to at least one of the preceding claims, **characterized in that** the several water ice moldings (15; 35; 51) are supplied to the container opening via a guide means, wherein the guide means is positioned relative to the container opening by means of a positioning means (59).

8. A method for producing a beverage in a beverage container, with the following steps:
- providing a beverage container (11; 31) to be filled;
- prior to introducing a cooling agent and prior to the filling with a beverage liquid (12; 32), cooling the beverage container (11; 31) to a temperature between the freezing point of the beverage liquid (12; 32) and 0 degrees Celsius;
- introducing the cooling agent in the beverage container (11; 31) through a container opening, wherein the cooling agent has several water ice moldings (15; 35);
- when introducing the cooling agent, introducing a quantity of liquid water with a temperature of more than 0 °C, which covers a bottom (14; 34) of the beverage container, so that the bottom (14; 34) freezes the added water thereon and also freezes the several water ice moldings (15; 35);
- filling the beverage container (11; 31) with the beverage liquid (12; 32) through the container opening after the introduction of the cooling agent with the several water ice moldings (15; 35);
- closing the container opening by means of a disposable closure and
- cooled storing of the filled beverage container (11; 31);
wherein
- the beverage container (11; 31) has a container section, which tapers towards the container opening and which is closed by means of the disposable closure;
- the cooling agent with the several water ice moldings (15; 35) and the beverage liquid (12; 32) are introduced through the tapering container section after passing the container opening and
- the several water ice moldings (15; 35) are larger than a diameter of the container opening in one spatial dimension.

9. A method for producing a beverage in a beverage container, with the following steps:
- providing a beverage container (11; 31) to be filled;
- introducing a cooling agent in the beverage container (11; 31) through a container opening, wherein the cooling agent has several water ice moldings (15; 35), wherein the several water ice moldings (15; 35) fall onto a bottom (14; 34) of the beverage container (11; 31) and touch the latter and wherein the bottom (14; 34) of the beverage container (11; 31) has a temperature higher than 0 °C and thus partly melts the several water ice moldings (15; 35) externally;
- prior to filling with a beverage liquid (12; 32), cooling the beverage container (11; 31) to a temperature between the freezing point of the beverage liquid (12; 32) and 0 degrees Celsius;
- filling the beverage container (11; 31) with a beverage liquid (12; 32) with a temperature of less than or equal to 0 °C through the container opening after the introduction of the cooling agent with the several water ice moldings (15; 35), wherein the water ice moldings (15; 35) adhere to the bottom (14; 34) of the beverage container (11; 31) and do not float when the beverage liquid (12; 32) is added;
- closing the container opening by means of a disposable closure and
- cooled storing of the filled beverage container (11; 31);
wherein
- the beverage container (11; 31) has a container section, which tapers towards the container opening and which is closed by means of the disposable closure;
- the cooling agent with the several water ice moldings (15; 35) and the beverage liquid (12; 32) are introduced through the tapering container section after passing the container opening and
- the several water ice moldings (15; 35) are larger than a diameter of the container opening in one spatial dimension.

## Revendications

1. Procédé de fabrication d'une boisson dans un contenant pour boisson avec les étapes suivantes :
- fourniture d'un contenant pour boisson (11 ; 31) à remplir ;
- introduction d'un réfrigérant dans le contenant pour boisson (11 ; 31) par une ouverture de contenant, sachant que le réfrigérant comporte plusieurs corps moulés de glace à base d'eau (15 ; 35), sachant que plusieurs corps moulés de glace à base d'eau (15 ; 35) tombent sur un fond (14 ; 34) du contenant pour boisson (11 ; 31) et touchent celui-ci et sachant que le fond (14 ; 34) du contenant pour boisson (11 ; 31) a une température supérieure à 0 °C et fond de ce fait extérieurement ces nombreux corps moulés de glace à base d'eau (15 ; 35) ;
- remplissage du contenant pour boisson (11 ; 31) avec un liquide de boisson (12 ; 32) à une température inférieure à 0 °C par l'ouverture du contenant après l'introduction du réfrigérant avec plusieurs corps moulés de glace à base d'eau (15 ; 35), sachant que les corps moulés de glace à base d'eau (15 ; 35) adhèrent au fond (14 ; 34) du contenant pour boisson (11 ; 31) et ne flottent pas, lorsque le liquide de boisson (12 ; 32) est ajouté ;
- fermeture de l'ouverture de contenant avec une fermeture unidirectionnelle, et
- entreposage réfrigéré du contenant pour boisson rempli (11 ; 31) ;
sachant que
- le contenant pour boisson (11 ; 31) comporte une section de contenant se réduisant vers l'ouverture de contenant, qui est fermée avec la fermeture unidirectionnelle;
- le réfrigérant avec plusieurs corps moulés de glace à base d'eau (15 ; 35) et le liquide de boisson (12 ; 32) sont introduits par la section de contenant se réduisant après le passage de l'ouverture de contenant, et
- plusieurs corps moulés de glace à base d'eau (15 ; 35) sont dans une dimension spatiale plus grands qu'un diamètre de l'ouverture de contenant.

2. Procédé selon la revendication 1, **caractérisé en ce que** le contenant de boisson (11; 31) rempli est entreposé à une température de réfrigération, qui est supérieure au point de congélation du liquide de boisson (12 ; 32).

3. Procédé selon la revendication 1 ou 2, **caractérisé en ce que** l'ouverture de contenant est fermée avec une fermeture unidirectionnelle appartenant au groupe suivant : capsules, bouchons, fermeture à vis, fermeture 'Twist-Off', fermeture à étrier et fermetures thermoscellées.

4. Procédé selon au moins l'une quelconque des revendications précédentes, **caractérisé en ce qu'**un liquide de boisson alcoolisé (12 ; 32), qui contient proportionnellement de l'éthanol et/ou un liquide de boisson non alcoolisé (12 ; 32), qui contient proportionnellement de la glycérine, sont introduits.

5. Procédé selon au moins l'une quelconque des revendications précédentes, **caractérisé en ce qu'**une quantité d'eau liquide est introduite en plus dans le contenant pour boisson (11 ; 31) lors de l'introduction du réfrigérant avec plusieurs corps moulés de glace à base d'eau (15 ; 35), qui couvre un fond (14 ; 34) du contenant pour boisson (11 ; 31).

6. Procédé selon au moins l'une quelconque des revendications précédentes, **caractérisé en ce que** le contenant de boisson (11; 31) est réfrigéré en entreposage réfrigéré à une température de réfrigération qui est inférieure à une température de fonte du liquide de boisson (12 ; 32).

7. Procédé selon au moins l'une quelconque des revendications précédentes, **caractérisé en ce que** plusieurs corps moulés de glace à base d'eau (15 ; 35 ; 51) sont acheminés vers l'ouverture de contenant par un système de guidage, sachant que le système de guidage est positionné par rapport à l'ouverture du contenant au moyen d'un système de positionnement (59).

8. Procédé de fabrication d'une boisson dans un contenant pour boisson avec les étapes suivantes :
- fourniture d'un contenant pour boisson (11 ; 31) à remplir ;
- réfrigération du contenant pour boisson (11 ; 31) avant introduction d'un réfrigérant et avant le remplissage avec un liquide de boisson (12 ; 32) à une température se situant entre le point de congélation du liquide de boisson (12 ; 32) et 0 degré Celsius ;
- introduction du réfrigérant dans le contenant pour boisson (11 ; 31) par une ouverture de contenant, sachant que le réfrigérant comporte plusieurs corps moulés de glace à base d'eau (15 ; 35) ;
- lors de l'introduction du réfrigérant, introduction d'une quantité d'eau liquide à une température supérieure à 0 °C, qui couvre un fond (14 ; 34) du contenant pour boisson de telle manière que le fond (14 ; 34) congèle l'eau ajoutée dessus et congèle en même temps les nombreux corps moulés de glace à base d'eau (15 ; 35) ;
- remplissage du contenant pour boisson (11 ; 31) avec le liquide de boisson (12 ; 32) par l'ouverture du contenant après l'introduction du réfrigérant avec plusieurs corps moulés de glace à base d'eau (15 ; 35) ;
- fermeture de l'ouverture de contenant avec une fermeture unidirectionnelle, et
- entreposage réfrigéré du contenant pour boisson rempli (11 ; 31) ;
sachant que
- le contenant pour boisson (11 ; 31) comporte une section de contenant se réduisant vers l'ouverture de contenant, qui est fermée avec la fermeture unidirectionnelle ;
- le réfrigérant avec plusieurs corps moulés de glace à base d'eau (15 ; 35) et le liquide de boisson (12 ; 32) sont introduits par la section de contenant se réduisant après le passage de l'ouverture de contenant, et
- plusieurs corps moulés de glace à base d'eau (15 ; 35) sont dans une dimension spatiale plus grands qu'un diamètre de l'ouverture de contenant.

9. Procédé de fabrication d'une boisson dans un contenant pour boisson avec les étapes suivantes :
- fourniture d'un contenant pour boisson (11 ; 31) à remplir ;
- introduction d'un réfrigérant dans le contenant pour boisson (11 ; 31) par une ouverture de contenant, sachant que le réfrigérant comporte plusieurs corps moulés de glace à base d'eau (15 ; 35), sachant que plusieurs corps moulés de glace à base d'eau (15 ; 35) tombent sur un fond (14 ; 34) du contenant pour boisson (11 ; 31) et touchent celui-ci et sachant que le fond (14 ; 34) du contenant pour boisson (11 ; 31) a une température supérieure à 0 °C et fond de ce fait extérieurement les nombreux corps moulés de glace à base d'eau (15 ; 35) ;
- réfrigération du contenant pour boisson (11 ; 31) avant le remplissage avec un liquide de boisson (12 ; 32) à une température se situant entre le point de congélation du liquide de boisson (12 ; 32) et 0 degré Celsius ;
- remplissage du contenant pour boisson (11 ; 31) avec un liquide de boisson (12 ; 32) à une température inférieure ou égale à 0 °C par l'ouverture du contenant après l'introduction du réfrigérant avec plusieurs corps moulés de glace à base d'eau (15 ; 35), sachant que les corps moulés de glace à base d'eau (15 ; 35) adhèrent au fond (14 ; 34) du contenant pour boisson (11 ; 31) et ne flottent pas, lorsque le liquide de boisson (12 ; 32) est ajouté ;
- fermeture de l'ouverture de contenant avec une fermeture unidirectionnelle, et
- entreposage réfrigéré du contenant pour boisson rempli (11 ; 31) ;
sachant que
- le contenant pour boisson (11 ; 31) comporte une section de contenant se réduisant vers l'ouverture de contenant, qui est fermée avec la fermeture unidirectionnelle ;
- le réfrigérant avec plusieurs corps moulés de glace à base d'eau (15 ; 35) et le liquide de boisson (12 ; 32) sont introduits par la section de contenant se réduisant après le passage de l'ouverture de contenant, et
- plusieurs corps moulés de glace à base d'eau (15 ; 35) sont dans une dimension spatiale plus grands qu'un diamètre de l'ouverture de contenant.
